# EUROPEAN PATENT SPECIFICATION

(11) **EP 2 797 758 B1**
(45) Date of publication and mention of the grant of the patent: **04.04.2018**
(21) Application number: 12824704.6
(22) Date of filing: 27.12.2012
(51) Int. Cl.: B60C 11/12, B60C 11/03

(54) **PNEUMATIC TIRE FOR MOTORCYCLE**
LUFTREIFEN FÜR EIN MOTORRAD
PNEUMATIQUE POUR MOTOCYCLETTE

(30) Priority: 30.12.2011 IT RM20110697; 26.03.2012 US 201261615477 P
(43) Date of publication of application: 05.11.2014
(73) Proprietor: Pirelli Tyre S.p.A., 20126 Milano (IT)
(72) Inventor: MISANI, Pierangelo, I-20126 Milano (IT); MARIANI, Mario, I-20126 Milano (IT)
(74) Representative: Fabiano, Piero
(86) International application number: PCT/IB2012/002802
(87) International publication number: WO 2013/098634

(56) References cited:
- EP-A1- 0 062 970
- JP-A- 7 081 317
- JP-A- 10 044 717

## Description

### Field of the invention

The present invention relates to tyres for motorcycles. In particular, the present invention relates to tyres intended to be fitted to wheels of motorcycles having medium/large engine capacity (e.g. 600 cm³ or higher), and/or high power (e.g. 130-140 hp or higher).

### Prior art

The Applicant has noticed that this kind of motorcycles, particularly in the area of southern Europe or in areas of Europe facing the sea, is nowadays employed all year round for a so-called "commuting" use. In other words, it is employed for daily travelling, even over not negligible distances, for reaching and coming back from the workplace, on very different kinds of roads, often uneven and/or paved.

Generally, for this kind of use, tyres having more markedly summer features and thus not intended for use with typically winter temperatures and conditions are mainly employed.

Such tyres generally do not have, in fact, a tread pattern which is able to ensure grip on cold and/or slippery terrains, like those typically occurring during winter months.

For the scooter category, the Applicant markets tyres named Metzeler Feelfree Wintec™, suitable for winter use, which, besides envisaging a particular compound, adapted to provide, independently of the temperature, a high grip level also in cold and rainy conditions, envisage a tread pattern especially designed for ensuring proper drainage and have an arrangement of sipes adapted to promote quick heating of the compound, generally providing a greater driving safety.

Document EP 0062 970, corresponding to the preamble of claim 1, discloses a tyre for a two wheeled single track vehicle, provided with spaced tread blocks separated by a plurality of first grooves spaced around the tyre circumference.

Document JP 07-81317 discloses a tyre comprising a plurality of independent blocks having sipes.

Document JP 10-044717 discloses a tyre for a motorcycle comprising a plurality of groves an sipes, wherein the sipes are arranged into respective blocks.

### Summary of the invention

The Applicant has however noticed that the insertion of sipes can make the compound of the tyre excessively yielding at the tread band portions where the sipes are provided, causing a delay in the driving response of the tyre: this problem, on motorcycles suitable also for a more sporty driving style, can led to a worsening of the speed performance of the tyre and, in the worst case, to a reduction of its safety level.

The Applicant has thus faced the problem of providing a tyre, particularly for vehicles having medium/large engine capacity and employed for a "commuting" use, which tyre can be used substantially all year round, is capable of ensuring good grip also in cold conditions, has high reliability on wet grounds, and, at the same time, allows achieving a performance comparable with that of typical summer tyres in terms of promptness of response and drivability, also in case of a sporty driving style, without reducing the safety level.

The Applicant has found that the aforesaid features, even if partially conflicting with one another, can be obtained by means of a tread pattern envisaging, in the central portion, a distribution of grooves adapted to provide a controlled yielding of the tread band, that ensures a larger footprint area and thus a greater grip to the ground, and a distribution of sipes differentiated between the central region and the shoulder regions of the tread band, for promoting quick heating of the compound and at the same time ensuring a greater driving safety.

In a first aspect thereof, the invention relates to a tyre for motorcycles, having a tread band comprising a central annular portion (A) located astride an equatorial plane (X-X); and two shoulder annular portions (B) located on axially opposite sides relative to the central annular portion (A); wherein
the central annular portion (A) has an axial extension (M) not greater than 65% of the axial development of the tread band;
the tread band comprises a plurality of grooves and sipes adapted to define a tread pattern;
the central annular portion (A) comprises at least two first substantially longitudinal grooves, opposed to each other relative to the equatorial plane X-X of the tyre;
- the first substantially longitudinal grooves extend mainly in the central annular portion (A);
- the void-to-rubber ratio defined by the sipes of the said central annular portion being smaller than the void-to-rubber ratio defined by the sipes of each shoulder annular portion.

The Applicant has noticed that such an arrangement and configuration of the first longitudinal grooves together with the number and arrangement of the sipes allows obtaining a central portion of the tread band which improves the grip, above all on uneven terrains, such as paved terrains or terrains with damaged asphalt. The Applicant believes that such an improvement is due to a more uniform pressure distribution of the tread band under the footprint. Furthermore, the Applicant has found that such a distribution of the sipes allows heating more uniformly and quickly the compound of the tyre when used during winter months, i.e. when the outer temperatures hinder the heating of the covering, with advantage to the driving safety and wear evenness. These features can be observed above all on uneven terrains such as those in towns, where the driving style is characterised mainly by limited lean angles. The differentiated void-to-rubber ratio reduces the excessive mobility of the central portion of the tread band and promotes instead a prompt attainment of the suitable operating temperature in the shoulder portions of the tread band, which are more rarely stressed by a use in town during winter months.

Within the framework of the present invention, by "sipe" it is meant a groove having an average width smaller than about 3 mm and, preferably, a depth of at least about 2 mm.

By "tread pattern" it is meant the representation of each point of the tread band (grooves included) on a plane perpendicular to the equatorial plane of the tyre and tangent to the maximum diameter of the tyre.

Angular measurements, and/or linear quantities (distances, widths, lengths, etc.), and/or areas are to be intended as referred to the tread patter as defined above.

Moreover, referring to the angular arrangement of the grooves or sipes formed in the tread band relative to the equatorial plane of the tyre (or to a direction parallel thereto), such an angular arrangement is to be intended, for each point of the groove or sipe, as referred to the acute angle (comprised between 0° and ±90°) defined by a rotation, in that point, made starting from the equatorial plane (or from a direction parallel thereto) up to the direction tangent to the groove or sipe passing through that point. If the rotation is made clockwise, the angle is marked with a positive sign; on the contrary, i.e. in the case of a counterclockwise rotation, the angle is marked with a negative sign.

Within the framework of the present invention two angles or inclinations are said to be concordant if they have the same sign.

The following definitions further apply:
- By "tyre for motorcycles" it is meant a tyre having a high curvature ratio (typically higher than 0.200), which allows high camber angles to be reached when the motorcycle runs on a bend.
- By "equatorial plane" of the tyre it is meant a plane perpendicular to the rotation axis of the tyre and dividing the tyre into two symmetrically equal portions.
- By "circumferential" direction it is meant a direction generically directed according to the rotation direction of the tyre, or in any case only slightly inclined relative to the rotation direction of the tyre.
- By "void-to-rubber ratio" it is meant the ratio between the total area of the grooves (including the sipes) of a determined portion of the tread pattern of the tyre (possibly of the whole tread pattern) and the total area of the determined portion of the tread pattern (possibly of the whole tread pattern).
- By "void-to-rubber ratio of the sipes" it is meant the ratio between the total area of the sipes of a determined portion of the tread pattern of the tyre (possibly of the whole tread pattern) and the total area of the determined portion of the tread pattern (possibly of the whole tread pattern).
- By "axial development" L of the tread band it is meant the length of the curve defining the radially outermost profile of the tread band in a cross section of the tyre.
- By "curvature ratio" of the tyre it is meant the ratio between the distance of the radially highest point of the tread band from the maximum chord of the tyre, and the same maximum chord of the tyre, in a cross section of the tyre.
- By "average inclination" or "average angular arrangement" of a groove or sipe it is meant the arithmetic mean of the inclinations / angular arrangements of the portions forming the groove relative to the equatorial plane of the tyre (or to direction parallel thereto).

The present invention, in one or more preferred aspects, may comprise one or more of the features hereinafter presented.

Preferably, the first substantially longitudinal grooves are at least partially facing one another so as to delimit in the axial direction at least partially a tread band portion.

Preferably, the sipes are arranged both in the central annular portion (A) and in the shoulder annular portions (B).

Preferably, the maximum void-to-rubber ratio defined by the sipes of the said central annular portion (A) is smaller than 2%.

Preferably, the maximum void-to-rubber ratio defined by the sipes of each shoulder annular portion (B) is greater than 2%.

Preferably, each shoulder annular portion (B) may comprise a plurality of lateral sipes. The lateral sipes may extend essentially in the shoulder annular portion (B) and may be arranged obliquely relative to the equatorial plane (X-X) of said tyre.

Conveniently, at least one of the lateral sipes of each shoulder annular portion (B) may have an inclination ϕ ≤ 60° in absolute value relative to a direction parallel to the equatorial plane X-X.

Preferably, the number of sipes of each shoulder annular portion (B) is greater than the number of sipes of the central annular portion (A). In this framework, in the case of a sipe extending in both, i.e. the shoulder and the central, annular portions, such sipe is calculated only once and is assigned to the portion in which it has a greater extension.

Advantageously, the central annular portion (A) may comprise a module repeated along a direction of circumferential development of the tyre. The module may comprise the said at least two first substantially longitudinal grooves and at least one first sipe.

By the expression module of the tread pattern or of a portion thereof it is meant a tread pattern portion which is repeated substantially the same in sequence along the whole circumferential development of the tread band itself or of the portion of tread band itself. The modules, while keeping the same pattern configuration, may however have different circumferential lengths.

Advantageously, in each module at least one first sipe may be arranged at at least one end of a first substantially longitudinal groove.

Preferably, each first longitudinal groove may have a centre line defining an extension direction of the said first longitudinal groove. The first sipe may extend substantially for at least a portion of its extension along the continuation of the extension direction of the first longitudinal groove or along a line parallel to the latter.

Advantageously, the aforesaid choice does not introduce further deformation lines in the tread band in addition to those created by the grooves, with advantage to the stiffness of the central portion of the tread band and, therefore, to the stability of the tyre, above all in straight running, towards arising of lateral stresses.

Alternatively, the first sipe may extend, substantially for at least a portion of its extension, along a line inclined relative to the continuation of the extension direction of the first longitudinal groove so as to form an angle, preferably an acute angle, with the continuation of said extension direction. Preferably, the first sipe may extend from one end of the first longitudinal groove. The aforesaid choice of continuing the extension of the sipe from the end of the first groove reduces the likelihood that locally raised portions might be created on the tread surface due to discontinuities represented by the ends of the grooves/sipes, to the detriment of pressure evenness in the footprint area.

Preferably, the first sipe may extend from one end of the first longitudinal groove at least up to the equatorial plane (X-X).

Advantageously, the first sipe extends from one end of a first longitudinal groove to the first longitudinal groove which is circumferentially consecutive.

Preferably, the first sipe may have a length measured along its extension not smaller than 20% of the axial extension M of the central annular portion (A). Conveniently, the first sipe may have a length measured along its extension not greater than 200% of the axial extension M of the central annular portion (A).

Advantageously, the first sipe may have a length measured along its extension not greater than 50% of the length of the first longitudinal groove measured along the extension thereof.

Preferably, the first sipe has a length measured along its extension not smaller than 10% of the length of the first longitudinal groove measured along the extension thereof.

Conveniently, the module has a plurality of first sipes.

Preferably, each first longitudinal groove may have a substantially curvilinear course so as to form a concavity.

Advantageously, in each module the two first substantially longitudinal grooves are mutually staggered in the circumferential direction.

Preferably, each first longitudinal groove has a width which varies along its extension.

Advantageously, in each module two first sipes may be present for each first longitudinal groove. Each first sipe may be arranged at a respective end of the first longitudinal groove.

Preferably, the tread band may have a plurality of second grooves and a plurality of second sipes.

Conveniently, each second groove may have a substantially curvilinear course.

Preferably, at least one second sipe may be arranged at at least one end of a second groove.

Advantageously, in each shoulder annular portion (B), at least one lateral sipe may be arranged alternating with a lateral groove in the circumferential direction.

Conveniently, the grooves and the sipes of the tread pattern may define altogether on the tread band a void-to-rubber ratio of at least about 10% and, preferably, not greater than about 20%.

### Brief description of the figures

Further features and advantages of the present invention will become more apparent from the following detailed description of some embodiments thereof, provided as non-limiting examples, made hereafter with reference to the accompanying drawings, wherein:
- figure 1 schematically shows a radial section of a tyre according to the invention;
- figure 2 shows a portion of the circumferential development of a first example of a tyre according to the invention to be fitted to the rear wheel of a motorcycle;
- figure 3 shows a portion of the circumferential development of a second example of a tyre according to the invention to be fitted to the front wheel of a motorcycle;
- figure 4 shows in a graph the behaviour of the void-to-rubber ratio of the sipes on the tread band of a rear tyre having the pattern of figure 2, as a function of the distance on the axial development of the tread band from the equatorial plane X-X; and
- figure 5 shows in a graph the behaviour of the void-to-rubber ratio of the sipes on the tread band of a front tyre having the pattern of figure 3, as a function of the distance on the axial development of the tread band from the equatorial plane X-X.

### Detailed description of embodiments of the invention

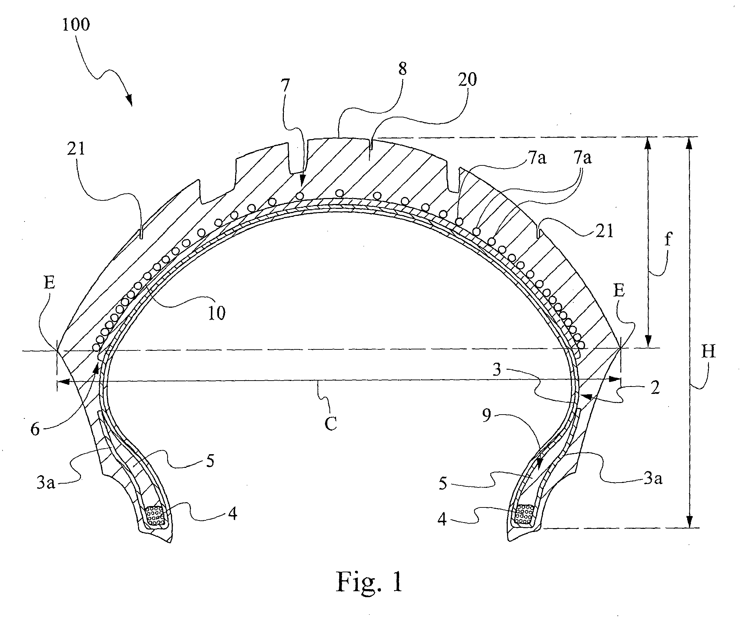

In figure 1 a tyre for motorcycle wheels according to the present invention is generally indicated at 100. The tyre 100 is preferably intended to be used on a rear wheel of a motorcycle of the "commuting" segment.

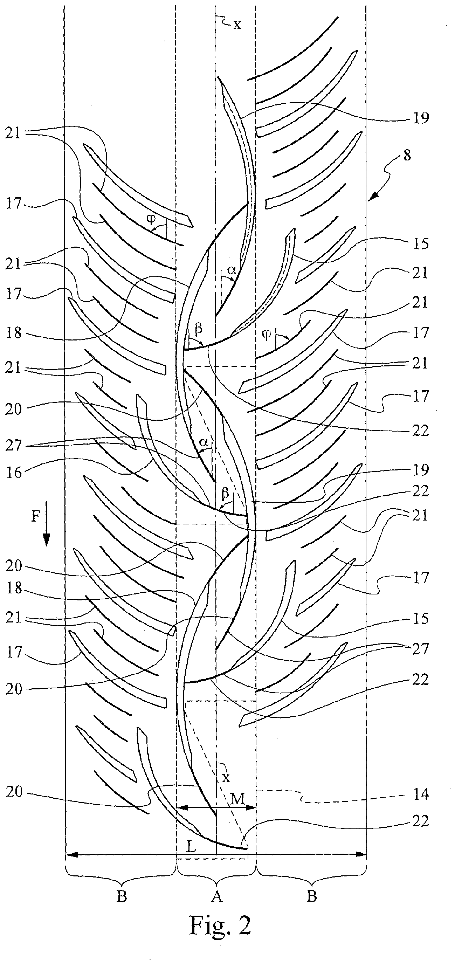

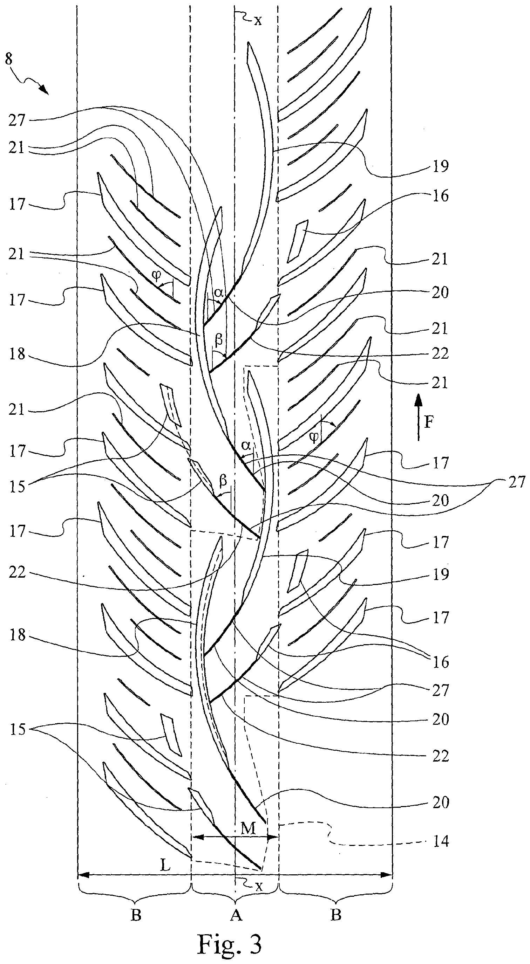

Referring also to figures 2, 3, an equatorial plane X-X and a rotation axis (not shown in the figures) are defined in the tyre 100. Moreover, a circumferential direction and an axial direction, perpendicular to the equatorial plane X-X, are defined. The arrow F indicates the rotation direction of the tyre.

The tyre 100 comprises a carcass structure 2 including at least one carcass ply 3, made of an elastomeric material and comprising a plurality of reinforcing elements.

The carcass ply 3 engages, by means of opposite circumferential edges thereof, at least one annular reinforcing structure 9.

In particular, the opposite lateral edges 3a of the carcass ply 3 are turned up about annular reinforcing structures 4 called bead cores.

A tapered elastomeric filling 5 taking up the space defined between the carcass ply 3 and the respective turned up lateral edge 3a of the carcass ply 3 is applied onto the axially outer perimeter edge of the bead cores 4.

As known, the tyre region comprising the bead core 4 and the filling 5 forms the so-called bead, intended for anchoring the tyre to a respective fitting rim, not shown.

The reinforcing elements included in the carcass ply 3 preferably comprise textile cords, selected from those usually adopted in the manufacture of carcasses for tyres, for example nylon, rayon, lyocell, PET, PEN, aramid cords.

In an embodiment not shown, the carcass structure has its opposite lateral edges associated without a turn-up with special annular reinforcing structures provided with two annular inserts. A filling of elastomeric material may be located in an axially outer position relative to the first annular insert. The second annular insert is instead located in an axially outer position relative to the end of the carcass ply. Finally, in an axially outer position relative to said second annular insert, and not necessarily in contact with the same, a further filling can be provided which terminates the formation of the annular reinforcing structure.

A belt structure 6 is circumferentially applied, in a radially outer position, onto the carcass structure 2. A tread band 8 is circumferentially superimposed on the belt structure 6. Longitudinal and/or transverse grooves, arranged so as to define a desired tread pattern, are typically formed on the tread band 8 further to a moulding operation carried out at the same time with the vulcanization of the tyre.

The tyre 100 may comprise a pair of sidewalls laterally applied on axially opposite sides to said carcass structure 2.

The tyre 100 has a cross section characterised by a high transverse curvature.

In particular, the tyre 100 has a section height H measured, at the equatorial plane, between the top of the tread band and the fitting diameter, identified by a reference line passing through the tyre beads at the bead cores 4.

The tyre 100 further has a width C defined by the distance between the laterally opposite ends E of the tread itself, and a curvature defined by the specific value of the ratio between the distance f of the top of the tread from the line passing through the ends E of the tread itself, measured at the equatorial plane of the tyre, and the aforesaid width C. The ends E of the tread may be formed by a corner.

In the present description and in the subsequent claims, by high curvature tyres, tyres are meant which have a curvature ratio f/C not smaller than 0.2, preferably f/C ≥ 0.25, for example equal to 0.28. Preferably, such curvature ratio f/C is not greater than 0.8, preferably f/C ≤ 0.5.

Preferably, the tyres have particularly low sidewalls (fig. 1). In other words, by tyres with low or lowered sidewalls, tyres are meant in which the sidewall height ratio (H-f)/H is smaller than about 0.7, more preferably smaller than about 0.65, for example equal to about 0.5.

The carcass structure 2 is typically lined on its inner walls with a sealing layer, or so-called "liner", essentially consisting of a layer of an airtight elastomeric material, adapted to ensure the tight seal of the tyre itself after it has been inflated.

Preferably, the belt structure 6 consists of a layer 7 having a plurality of circumferential windings 7a axially arranged in side-by-side relationship, formed by a rubberized cord or by a strip comprising a number (preferably, from two to five) of rubberized cords, spirally wound at an angle substantially equal to zero (typically between 0° and 5°) relative to a direction parallel to the equatorial plane X-X of the tyre.

Preferably, the belt structure extends substantially over the whole crown portion of the tyre.

In an alternative embodiment, the belt structure 6 may comprise at least two radially superimposed layers, each consisting of elastomeric material reinforced with cords arranged parallel to one another. The layers are arranged so that the cords of the first belt layer are oriented obliquely relative to the equatorial plane of the tyre, whereas the cords of the second layer also have an oblique orientation, but symmetrically crossed relative to the cords of the first layer (so-called "cross-belt").

Generally, the cords of the belt structure are textile or metallic cords.

Preferably, the tyre 100 may comprise a layer 10 of elastomeric material, located between said carcass structure 2 and said belt structure 6 formed by said circumferential coils, said layer 10 preferably extending over an area substantially corresponding to the area on which the belt structure 6 develops.

In a further embodiment, an additional layer (not shown in figure 1) of elastomeric material is located between said belt structure 6 and said tread band 8, said layer preferably extending over an area substantially corresponding to the area on which said belt structure 6 develops. Alternatively, said layer extends only over at least a portion of the development of the belt structure 6, for example over opposite lateral portions thereof.

In a preferred embodiment, at least one of said layer 10 and said additional layer comprises a reinforcing material, for example short aramid fibers, for example Kevlar® fibers, dispersed in said elastomeric material.

The tread band 8 can be divided into a central annular portion A symmetrically located astride an equatorial plane X-X and two lateral annular portions B located on axially opposite sides relative to the central annular portion A.

The central portion A is intended to contact the road surface when the motorcycle is running straight or slightly leaning, whereas the shoulder portions B are intended to contact the road surface when the motorcycle negotiates a bend, leaning more markedly.

Each central annular portion A has an axial extension M not greater than 65% of the axial development L of the tread band 8 and preferably not smaller than 10% of the axial development L of the tread band 8.

Each shoulder annular portion B has an axial extension not greater than 45% of the axial development of the tread band 8.

As shown in figures 2 and 3, on the tread band 8 a tread pattern is formed comprising a plurality of grooves 15, 16, 17, 18, 19 and sipes 20, 21, 22 which altogether define on the tread band a void-to-rubber ratio preferably greater than 10%, not higher than about 20%.

The central annular portion A comprises a module 14 repeated along a direction of circumferential development of the tyre. The module 14 is repeated along the circumferential development of the tyre preferably thirteen times at most.

The module 14 has two first substantially longitudinal grooves 18, 19, opposed to each other relative to the equatorial plane X-X, and at least one first sipe 20.

The first substantially longitudinal grooves 18, 19 extend mainly in the central annular portion A. Referring to the embodiment shown in figures 2 and 3, the first substantially longitudinal grooves 18, 19 extend for their entire extension in the central annular portion A. Visually, the boundary of the central annular portion A in the axial direction may be identified by the axially outermost portions of the first substantially longitudinal grooves 18, 19, as indicated for example by the vertical dashed lines in figures 2 and 3. The first substantially longitudinal grooves 18, 19 are at least partially facing each other, so as to delimit in the axial direction at least one portion of the tread band 8.

In other words, the first substantially longitudinal grooves 18, 19 alternate with one another on opposite sides relative to the equatorial plane X-X along the circumferential direction of the tyre, so that a first groove 18 located on one side relative to the equatorial plane X-X is circumferentially followed by a subsequent first groove 19 located on the opposite side relative to the equatorial plane X-X.

In each module the first longitudinal grooves 18, 19 have a curvilinear course adapted to define a concavity directed towards the equatorial plane X-X and are mutually staggered in the circumferential direction.

Preferably, the first substantially longitudinal grooves are mutually staggered in the circumferential direction by at least 1/2 the pitch, preferably 1/4 the pitch. This advantageously allows keeping always at least one of the first grooves 18, 19 within the footprint area during straight running, so as to ensure good drainage when running on a wet ground.

Preferably, the first substantially longitudinal grooves 18, 19 have an average inclination substantially equal to zero. In any case, the maximum inclination of the first longitudinal grooves is less than 45° in absolute value. Referring to the embodiment shown in figures 2 and 3, the first substantially longitudinal grooves 18, 19 have a maximum inclination at their ends. Preferably, the first substantially longitudinal grooves 18, 19 extend over at least about 5% of the maximum longitudinal development of the tread band 8. They are thus grooves having a substantial length, typically of the order of the longitudinal dimension of the footprint area formed by the tyre under a nominal load. This feature of the first substantially longitudinal grooves 18, 19, together with their substantially curvilinear course, allows effectively draining water when running on wet asphalt (or terrain in general). Moreover, it has been found that such an arrangement of the first grooves 18, 19 allows limiting the noise they generate while the tyre is rolling. Preferably, the first grooves 18, 19 extend over about 25% at most, more preferably over about 10% at most, of the maximum longitudinal development of the tread band 8.

In the embodiment of figure 2 the width of the first grooves 18, 19 increases in a direction opposite to the preferred rolling direction F of the tyre. This choice may be convenient for increasing water drainage in a rear tyre during straight running on wet ground. For example, the width of the first substantially longitudinal grooves 18, 19 may vary between a minimum of 2-4 mm and a maximum of 6-8 mm.

In the embodiments of figure 3 the width of the first grooves 18, 19 increases in the preferred rolling direction F of the tyre. This choice may be convenient in a front tyre, for effectively breaking and opening water films and/or layers during straight running on a wet ground.

The arrangement described above of the first substantially longitudinal grooves 18, 19 allows the extension of the footprint area of the tyre to be increased. In particular, it has been found that the increase in the extension of the footprint area is due to an increase in the width of the same. The Applicant believes that such an outcome is due to the fact that the first substantially longitudinal grooves 18, 19 create a sort of "zip", which allows moving the crown portion of the tyre radially in a region away from the equatorial plane, so as to increase the yielding thereof. Moreover, the Applicant believes that the curvilinear arrangement (i.e. an arrangement not aligned with the equatorial plane X-X, except for portions of least longitudinal extension) of the first substantially longitudinal grooves 18, 19 allows increasing the yielding of the crown region in a controlled and not excessive way, so as not to cause fatigue failure of the tread band at the first substantially longitudinal grooves 18, 19 themselves.

The first substantially longitudinal grooves 18, 19 may have a decreasing depth, which reduces from the equatorial plane X-X towards the shoulders, preferably the first substantially longitudinal grooves 18, 19 have a depth smaller than or equal to 8 mm in the case of tyres intended to be fitted to the rear wheel of a motorcycle, and smaller than 6 mm in the case of tyres intended to be fitted to the front wheel of a motorcycle.

Each module 14 further has a plurality of first sipes 20. In general, the first sipes 20 are arranged obliquely relative to a direction parallel to the equatorial plane, and may have an inclination α ≤ 60°, preferably α ≤ 45°, in absolute value, relative to a direction parallel to the equatorial plane X-X. Preferably, the first oblique sipes 20 have an average inclination smaller than 60° in absolute value relative to a direction parallel to the equatorial plane X-X.

The first sipes 20 are preferably arranged on the tread band 8 according to a substantially curvilinear course.

Preferably, referring to the embodiment of figure 3, in each module 14 there are two first oblique sipes 20, one for each first substantially longitudinal groove 18, 19.

Referring to the embodiment of figure 2, in each module 14 there are preferably four first oblique sipes 20, two for each first substantially longitudinal groove 18, 19.

Each first oblique sipe 20 is located at an end of a respective first substantially longitudinal groove 18, 19. Preferably, each first oblique sipe 20 extends from the end of a respective first substantially longitudinal groove 18, 19.

The aforesaid choice of continuing the extension of the sipe from the end of the first groove reduces the likelihood that locally raised portions might be created on the tread surface due to discontinuities represented by the ends of the grooves/sipes, to the detriment of pressure evenness in the footprint area. Each first longitudinal groove 18, 19 has a centre line defining an extension direction of the first substantially longitudinal groove 18, 19.

The first oblique sipe 20 extends substantially for at least a portion of its extension along the continuation of the extension direction of the first longitudinal groove or along a line parallel to the latter.

The aforesaid choice does not introduce further deformation lines in the tread band in addition to those created by the grooves, with advantage to the stiffness of the central portion of the tread band 8 and, therefore, to the stability of the tyre, above all in straight running, towards arising of lateral stresses.

Referring to the embodiment of figure 2, a first oblique sipe 20 extends from a first end of a first substantially longitudinal groove 18, 19, and a further first oblique groove 20 extends from a second end of a first substantially longitudinal groove 18, 19. The first oblique sipe and the further first oblique sipe have inclination opposite to each other.

Referring to the embodiment of figure 3, only one first oblique sipe 20 extends from a first end of a first substantially longitudinal groove 18, 19. Referring to the embodiments of figures 2 and 3, in each module 14 each first oblique sipe 20 extends from one end of a first substantially longitudinal groove 18, 19 to the first longitudinal groove 18, 19 which is circumferentially consecutive, crossing the equatorial plane X-X of the tyre. Preferably, each first oblique sipe 20 may have a length measured along its extension not smaller than 20% of the axial extension M of the central annular portion (A).

Conveniently, each first oblique sipe 20 may have a length measured along its extension not greater than 200% of the axial extension M of the central annular portion (A).

Advantageously, each first oblique sipe 20 may have a length measured along its extension not greater than 50% of the length of the first longitudinal groove 18, 19 measured along the extension thereof. Preferably, each first oblique sipe 20 has a length measured along its extension not smaller than 10% of the length of the first longitudinal groove 18, 19 measured along the extension thereof.

Still referring to the embodiments of figures 2 and 3, each module 14 comprises at least portions of two second grooves 15, 16 and of the second sipes 22. The second grooves 15, 16 may extend also in the shoulder annular portions (B) of the tread band 8, possibly breaking themselves as shown in the embodiment of figure 2.

The second grooves 15, 16 alternate with one another on opposite sides relative to the equatorial plane X-X along the circumferential direction of the tyre, so that a second groove 15 located on one side relative to the equatorial plane X-X is circumferentially followed by a subsequent second groove 16 located on the opposite side relative to the equatorial plane X-X. Furthermore, the second grooves 15, 16 are arranged so that on a same side of the tread band 8 relative to equatorial plane X-X each second groove is interposed in the circumferential direction between two first substantially longitudinal grooves 18, 19.

Preferably, the second grooves 15, 16 have a variable width. In particular, the second grooves may have a width which increases from the axially innermost end to the axially outermost end. For example, the width of the second grooves 15, 16 may vary from a minimum of 2-4 mm to a maximum of 6-8 mm.

The second grooves 15, 16 may have a decreasing depth, which reduces from the equatorial plane X-X towards the shoulders. Preferably the second grooves 15, 16 have a depth smaller than or equal to 8 mm in the case of tyres intended to be fitted to the rear wheel of a motorcycle, and smaller than 6 mm in the case of tyres intended to be fitted to the front wheel of a motorcycle. The second grooves 15, 16 may have an average inclination greater than that of the first substantially longitudinal grooves 18, 19.

The second sipes 22 may be arranged at at least one end of a second groove 15, 16 located in the central annular portion (A) of the tread band 8. The second sipes 22 may be arranged at respective axially innermost ends of the second grooves 15, 16. The second sipes 22 extend at least mainly in the central annular portion (A).

The second sipes 22 may have an inclination relative to a direction parallel to the equatorial plane X-X β ≤ 90°, preferably β ≤ 70°, in absolute value.

The course of the second sipes 22 may be such that their average inclination relative to a direction parallel to the equatorial plane X-X is greater (in absolute value) than the average inclination of the first sipes 20. Preferably, the second sipes 22 have an average inclination smaller than 90°, even more preferably smaller than 70°, in absolute value, relative to a direction parallel to the equatorial plane X-X.

Preferably, the second sipes 22 have a substantially curvilinear course.

Each second groove 15, 16 has a centre line defining an extension direction of the second groove itself. Each second sipe 22 extends substantially for at least a portion of its extension along the continuation of the extension direction of the first longitudinal groove or along a line parallel to the latter. Also in this case, the aforesaid choice does not introduce further deformation lines in the tread band 8 in addition to those created by the grooves 15, 16, with advantage to the stiffness of the central portion of the tread band 8 and, therefore, to the stability of the tyre, above all in straight running, towards arising of lateral stresses.

Referring to the embodiments of figures 2 and 3, in each module 14 each second sipe 22 extends from the axially inner end of a second groove 15, 16 to a first longitudinal groove 18, 19 located on an opposite side of the tread band relative to the equatorial plane X-X, crossing the latter. Advantageously, each second sipe 22 may have a length measured along its extension not smaller than 20% of the axial extension M of the central annular portion (A).

Preferably, each second sipe 22 may have a length measured along its extension not greater than 80% of the axial extension M of the central annular portion (A).

Preferably, in each module 14 at least one first sipe 20 and at least one second sipe 22 are arranged so as to be circumferentially consecutive to each other, in order to form a pair 27 of sipes concordantly inclined.

Such a choice allows forming in the central portion sorts of blocks, which provide moderate mobility to the central annular portion (A) of the tread band, without reducing the stability thereof and at the same time increasing the grip thereof, with advantage to traction and braking.

For increasing the effect on the footprint on the ground, preferably two circumferentially consecutive pairs 27 of sipes are inclined discordantly relative to a direction parallel to the equatorial plane X-X: in other words, the first and second sipes 20, 22 forming a first pair 27 have an inclination with opposite sign relative to the inclination of the first and second sipes 20, 22 forming a second, circumferentially consecutive, pair 27.

Still referring to figures 2-3, each shoulder portion B has a plurality of lateral grooves 17 and lateral sipes 21.

The lateral grooves 17, as well as the lateral sipes 21, extend substantially obliquely relative to the equatorial plane X-X.

Still referring to the embodiments of figures 2 and 3, the lateral sipes 21, as well as the lateral grooves 17, of each shoulder annular portion (B) have an inclination ϕ ≤ 60° in absolute value relative to a direction parallel to the equatorial plane X-X.

Preferably, the lateral sipes have an average inclination smaller than 60°, in absolute value, relative to a direction parallel to the equatorial plane X-X. The lateral grooves 17 and the lateral sipes 21 are arranged alternated with one another in the circumferential direction. Preferably, they have a course substantially parallel to one another.

In the embodiment shown in figure 2, in each shoulder annular portion each lateral groove 17 is alternated in the circumferential direction with two lateral sipes 21.

The lateral grooves 17 preferably extend only in the shoulder annular portions B.

The lateral grooves 17 have a width which varies along their extension. Preferably, the lateral grooves 17 have a width which increases moving away from the equatorial plane X-X.

The lateral grooves 17 are arranged so as to be axially in side-by-side relationship with the first substantially longitudinal grooves 18, 19. In particular, the axially inner ends of the lateral grooves 17 may approach the first substantially longitudinal grooves 18, 19 without intersecting them (as in the embodiments shown in figure 2 and 3).

According to an important aspect of the present invention, the plurality of grooves and sipes of the tread band creates a tread pattern such that the void-to-rubber ratio defined by the first sipes 20 and second sipes 22 of the central annular portion (A) is smaller than the void-to-rubber ratio defined by the lateral sipes 21 of each shoulder annular portion (B).

The Applicant has found that such a distribution of the sipes allows heating more uniformly and quickly the compound of the tyre, with advantage to the driving safety and wear evenness, above all on uneven terrains such as those in towns. The Applicant has noticed, in fact, that on this kind of terrains the driving style is generally characterised by more limited lean angles and does not promote a strong and frequent interaction between the shoulder portions of the tread band and the terrain and thus the heating of such portions. This condition appears to grow more marked during winter months, when also the outer temperature tends to hinder a quick heating of the compound.

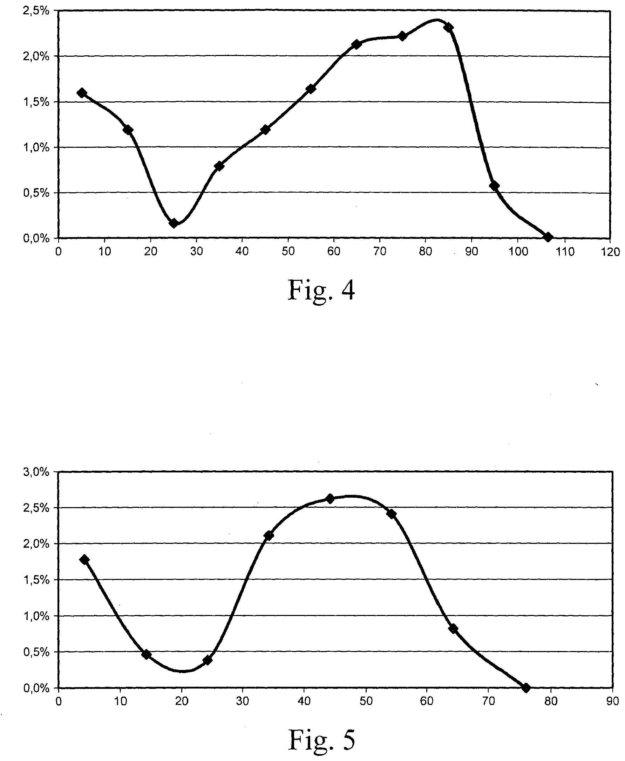

Figures 4 and 5 show graphs reporting the behaviour of the void-to-rubber ratio of the sipes starting from the equatorial plane and moving towards the shoulder regions.

In particular, in figure 4 the behaviour of the void-to-rubber ratio for a tyre intended to be fitted to the rear wheel of a motorcycle is shown, whereas in figure 5 the behaviour of the void-to-rubber ratio for a tyre intended to be fitted to the front wheel of a motorcycle is shown.

In the graphs, the percentage value of the void-to-rubber ratio of the sipes as a function of the distance in millimetres from the equatorial plane is reported on the ordinate, whereas the aforesaid distance is reported on the abscissa. For plotting the graphs, the void-to-rubber ratio of the sipes has been averaged on annular portions of the tread band having a width of about 10 mm.

The transition between the central annular portion A and the shoulder annular portion B is located between about 35 and 40 mm for the rear tyre and between about 25 and 35 mm for the front tyre.

Leaving out the axially outermost portion of the tread band, which cannot be taken into account because of the edge effect of the tyre, the graphs clearly show that the void-to-rubber ratio defined by the first and second sipes of the central annular portion A is always smaller than 2%. In other words, the maximum void-to-rubber ratio defined by the sipes of the said central annular portion (A) is smaller than 2%.

In the central annular portion A the void-to-rubber ratio has a minimum value for both the front and the rear tyre.

The Applicant has found, in fact, that in this portion of the tread band it is not necessary to have a high number of sipes, since the heating action and a greater yielding are obtained in the footprint area directly thanks to the configuration and arrangement of the first grooves.

The Applicant has actually found that increasing the presence of sipes, in terms of extension and/or number, in this region could cause the compound to become too much mobile, determining a delay in the promptness of response of the tyre.

In the shoulder annular portions B the void-to-rubber ratio has instead a maximum value for both the front and the rear tyre.

The graphs show, in fact, that the void-to-rubber ratio defined by the sipes of the shoulder annular portions (B) reaches values greater than 2%. In detail, the maximum void-to-rubber ratio defined by the sipes of the said central annular portion (A) is greater than 2%.

The Applicant has found that a large presence of sipes, in terms of number and/or extension, in this region ensures, in fact, a quick and more uniform heating of the compound of the tyre also during the coldest months.

The Applicant has noticed, in fact, that this portion of the tread band is relatively less subject to come into contact with the ground, and that a contact occurs only when the motorcycle is leaning. The Applicant has found therefore that in this portion of the tread band the insertion of sipes, according to a given percentage and extension, balances the difficulty of heating and of achieving a uniform pressure distribution due to cold months and to the less sporty driving style generally adopted on town roads.

The present invention has been described with reference to some embodiments thereof. Many modifications can be made in the embodiments described in detail, still remaining within the scope of protection of the invention, defined by the following claims.

## Claims

1. Tyre (100) for motorcycles, having a tread band (8) comprising a central annular portion (A) symmetrically located astride an equatorial plane (X-X); and two shoulder annular portions (B) located on axially opposite sides relative to the central annular portion (A);
the tread band (8) comprises a plurality of grooves and sipes adapted to define a tread pattern;
the tyre (100) being **characterized in that**:
the central annular portion (A) having an axial extension (M) not greater than 65% of the axial development of the tread band (8);
the central annular portion (A) comprises at least two first substantially longitudinal grooves (18, 19), opposed to each other relative to the equatorial plane X-X of the tyre;
- the first substantially longitudinal grooves (18, 19) extend mainly in the central annular portion (A);
- the void-to-rubber ratio defined by the sipes of the said central annular portion (A) being smaller than the void-to-rubber ratio defined by the sipes of each shoulder annular portion (B).

2. Tyre for motorcycles according to claim 1, wherein each shoulder annular portion (B) comprises a plurality of lateral sipes (21), the lateral sipes (21) extending essentially in the shoulder annular portion (B) and being arranged obliquely relative to the equatorial plane (X-X) of said tyre.

3. Tyre for motorcycles according to claim 1, wherein at least one of the lateral sipes (21) of each shoulder annular portion (B) has an inclination φ < 60° in absolute value relative to a direction parallel to an equatorial plane of the tyre.

4. Tyre for motorcycles according to any one of the previous claims 1 to 3, wherein the central annular portion (A) comprises a module (14) repeated along a direction of circumferential development of the tyre comprising the said at least two first substantially longitudinal grooves (18, 19) and at least one first sipe (20) and wherein in each module (14) said two first substantially longitudinal grooves (18, 19) are mutually staggered in the circumferential direction.

5. Tyre for motorcycles according to any one of the previous claims 1 to 4, wherein the number of sipes of each shoulder annular portion (B) is greater than the number of sipes of the central annular portion (A).

6. Tyre for motorcycles according to claim 4, wherein in each module said at least one first sipe (20) is arranged at at least one end of a first substantially longitudinal groove (18, 19).

7. Tyre for motorcycles according to claim 6, wherein each first longitudinal groove (18, 19) has a centre line defining an extension direction of the said first substantially longitudinal groove (18, 19); said first sipe (20) extending substantially for at least a portion of its extension along a line parallel to the continuation of said extension direction of the said first substantially longitudinal groove (18, 19).

8. Tyre for motorcycles according to claim 6, wherein each first longitudinal groove (18, 19) has a centre line defining an extension direction of the said first substantially longitudinal groove (18, 19); said first sipe (20) extending substantially for at least a portion of its extension along a line inclined relative to the continuation of said extension direction of the said first substantially longitudinal groove (18, 19) so as to form an angle with the continuation of said extension direction.

9. Tyre for motorcycles according to claim 4, wherein said first sipe (20) extends from one end of said first substantially longitudinal groove (18, 19).

10. Tyre for motorcycles according to claim 9, wherein said first sipe (20) extends from one end of said first substantially longitudinal groove (18, 19) at least up to the said equatorial plane (X-X).

11. Tyre for motorcycles according to claims 9 or 10, wherein said first sipe (20) extends from one end of a first substantially longitudinal groove (18, 19) to the first longitudinal groove (18, 19) which is circumferentially consecutive.

12. Tyre for motorcycles according to any one of the previous claims 4 to 11, wherein said first sipe (20) has a length measured along its extension not smaller than 20% of the axial extension M of the central annular portion (A).

13. Tyre for motorcycles according to any one of the previous claims 4 to 12, wherein said first sipe (20) has a length measured along its extension not greater than 200% of the axial extension M of the central annular portion (A).

14. Tyre for motorcycles according to any one of the previous claims 4 to 13, wherein said first sipe (20) has a length measured along its extension not greater than 50% of the length of the first substantially longitudinal groove (18, 19) measured along the extension thereof.

15. Tyre for motorcycles according to any one of the previous claims 4 to 14, wherein said first sipe (20) has a length measured along its extension not smaller than 10% of the length of the first substantially longitudinal groove (18, 19) measured along the extension thereof.

16. Tyre for motorcycles according to any one of the previous claims 1 to 15, wherein each first longitudinal groove (18, 19) has a substantially curvilinear course so as to form a concavity.

17. Tyre for motorcycles according to any one of the previous claims 1 to 16, wherein each first substantially longitudinal groove (18, 19) has a width which varies along its extension.

18. Tyre for motorcycles according to any one of the previous claims 4 to 17, wherein in each module (14) there are two first sipes (20) for each first longitudinal groove (18, 19), each first sipe (20) being arranged at a respective end of said first substantially longitudinal groove (18, 19).

19. Tyre for motorcycles according to any one of claims 4 to 18, wherein said tread band (8) has a plurality of second grooves (15, 16) and a plurality of second sipes (22) and wherein each second groove (15, 16) has a substantially curvilinear course.

20. Tyre for motorcycles according to claim 19, wherein said at least one second sipe (22) is arranged at at least one end of a second groove (15, 16).

## Patentansprüche

1. Reifen (100) für Motorräder mit einem Laufflächenring (8) umfassend einen zentralen ringförmigen Abschnitt (A), der symmetrisch zu beiden Seiten einer Äquatorialebene (X-X) angeordnet ist; und zwei ringförmige Schulterabschnitte (B), die an axial entgegengesetzten Seiten relativ zu dem zentralen ringförmigen Abschnitt (A) angeordnet sind,
wobei der Laufflächenring (8) eine Vielzahl von Nuten und Lamellen umfasst, die dazu geeignet sind, ein Laufflächenprofil zu definieren;
wobei der Reifen (100) **dadurch gekennzeichnet ist, dass:**
der zentrale ringförmige Abschnitt (A) ein axiale Ausdehnung (M) von nicht mehr als 65 % der axialen Erstreckung des Laufflächenrings (8) aufweist;
der zentrale ringförmige Abschnitt (A) zumindest zwei erste im Wesentlichen längsverlaufende Nuten (18, 19) aufweist, die einander relativ zu der Äquatorialebene X-X des Reifens gegenüberliegen;
- die ersten im Wesentlichen längsverlaufenden Nuten (18, 19) sich hauptsächlich in dem zentralen ringförmigen Abschnitt (A) erstrecken;
- wobei das Gesamtverhältnis der negativen und positiven Profilanteile, das durch die Lamellen in dem zentralen ringförmigen Abschnitt (A) definiert wird, kleiner als das Gesamtverhältnis der negativen und positiven Profilanteile ist, das durch die Lamellen eines jeden ringförmigen Schulterabschnitts (B) definiert wird.

2. Reifen für Motorräder nach Anspruch 1, wobei jeder ringförmige Schulterabschnitt (B) eine Vielzahl von lateralen Lamellen (21) umfasst, wobei die lateralen Lamellen (21) sich im Wesentlichen in dem ringförmigen Schulterabschnitt (B) erstrecken und im Wesentlichen schräg relativ zu der Äquatorialebene (X-X) des Reifens angeordnet sind.

3. Reifen für Motorräder nach Anspruch 1, wobei zumindest eine der seitlichen Lamellen (21) eines jeden ringförmigen Schulterabschnitts (B) eine Neigung φ < 60° in absoluten Werten relativ zu einer Richtung parallel zu einer Äquatorialebene des Reifens aufweist.

4. Reifen für Motorräder nach einem der vorhergehenden Ansprüche 1 bis 3, wobei der zentrale ringförmige Abschnitt (A) ein Modul (14) umfasst, das entlang einer Richtung der umlaufenden Erstreckung des Reifens wiederholt wird, umfassend die zumindest zwei ersten im Wesentlichen längsverlaufenden Nuten (18, 19) und zumindest eine erste Lamelle (20), und wobei in jedem Modul (14) die zwei ersten im Wesentlichen längsverlaufenden Nuten (18, 19) zueinander in der Umfangsrichtung versetzt sind.

5. Reifen für Motorräder nach einem der vorhergehenden Ansprüche 1 bis 4, wobei die Anzahl der Lamellen eines jeden ringförmigen Schulterabschnitts (B) größer ist als die Anzahl der Lamellen des zentralen ringförmigen Abschnitts (A).

6. Reifen für Motorräder nach Anspruch 4, wobei in jedem Modul die zumindest eine erste Lamelle (20) an zumindest einem Ende einer ersten im Wesentlichen längsverlaufenden Nut (18, 19) angeordnet ist.

7. Reifen für Motorräder nach Anspruch 6, wobei jede erste längsverlaufende Nut (18, 19) eine Mittellinie aufweist, die eine Erstreckungsrichtung der ersten im Wesentlichen längsverlaufenden Nut (18, 19) definiert; wobei die erste Lamelle (20) sich im Wesentlichen über zumindest einen Teil ihrer Erstreckung entlang einer Linie parallel zu der Fortführung der Erstreckungsrichtung der ersten im Wesentlichen längsverlaufenden Nut (18, 19) erstreckt.

8. Reifen für Motorräder nach Anspruch 6, wobei jede erste längsverlaufende Nut (18, 19) eine Mittellinie aufweist, die eine Erstreckungsrichtung der ersten im Wesentlichen längsverlaufenden Nut (18, 19) definiert; wobei die erste Lamelle (20) sich im Wesentlichen über zumindest einen Teil ihrer Erstreckung entlang einer Linie erstreckt, die schräg relativ zu der Fortführung der Erstreckungsrichtung der ersten im Wesentlichen längsverlaufenden Nut (18, 19) ist, um einen Winkel mit der Fortführung der Erstreckungsrichtung zu bilden.

9. Reifen für Motorräder nach Anspruch 4, wobei die erste Lamelle (20) sich von einem Ende der ersten im Wesentlichen längsverlaufenden Nut (18, 19) weg erstreckt.

10. Reifen für Motorräder nach Anspruch 9, wobei die erste Lamelle (20) sich von einem Ende der ersten im Wesentlichen längsverlaufenden Nut (18, 19) weg zumindest bis zu der Äquatorialebene (X-X) erstreckt.

11. Reifen für Motorräder nach den Ansprüchen 9 oder 10, wobei die erste Lamelle (20) sich von einem Ende einer ersten im Wesentlichen längsverlaufenden Nut (18, 19) zu der ersten längsverlaufenden Nut (18, 19) erstreckt, die ihr in Umfangsrichtung folgt.

12. Reifen für Motorräder nach einem der vorhergehenden Ansprüche 4 bis 11, wobei die erste Lamelle (20) eine Länge gemessen entlang ihrer Erstreckung aufweist, die nicht kleiner als 20 % der axialen Erstreckung M des zentralen ringförmigen Abschnitts (A) ist.

13. Reifen für Motorräder nach einem der vorhergehenden Ansprüche 4 bis 12, wobei die erste Lamelle (20) eine Länge gemessen entlang ihrer Erstreckung aufweist, die nicht größer als 200 % der axialen Erstreckung M des zentralen ringförmigen Abschnitts (A) ist.

14. Reifen für Motorräder nach einem der vorhergehenden Ansprüche 4 bis 13, wobei die erste Lamelle (20) eine Länge gemessen entlang ihrer Erstreckung aufweist, die nicht größer ist als 50 % der Länge der ersten im Wesentlichen längsverlaufenden Nut (18, 19), gemessen entlang ihrer Erstreckung.

15. Reifen für Motorräder nach einem der vorhergehenden Ansprüche 4 bis 14, wobei die erste Lamelle (20) eine Länge gemessen entlang ihrer Erstreckung aufweist, die nicht kleiner ist als 10 % der Länge der ersten im Wesentlichen längsverlaufenden Nut (18, 19), gemessen entlang ihrer Erstreckung.

16. Reifen für Motorräder nach einem der vorhergehenden Ansprüche 1 bis 15, wobei jede erste längsverlaufende Nut (18, 19) einen im Wesentlichen kurvenförmigen Verlauf hat, um eine Konkavität zu bilden.

17. Reifen für Motorräder nach einem der vorhergehenden Ansprüche 1 bis 16, wobei jede erste im Wesentlichen längsverlaufende Nut (18, 19) eine Breite aufweist, die entlang ihrer Erstreckung variiert.

18. Reifen für Motorräder nach einem der vorhergehenden Ansprüche 4 bis 17, wobei in jedem Modul (14) zwei erste Lamellen (20) für jede erste längsverlaufende Nut (18, 19) vorhanden sind, wobei jede erste Lamelle (20) an einem jeweiligen Ende der ersten im Wesentlichen längsverlaufenden Nut (18, 19) angeordnet ist.

19. Reifen für Motorräder nach einem der Ansprüche 4 bis 18, wobei der Laufflächenring (8) eine Vielzahl von zweiten Nuten (15, 16) und eine Vielzahl von zweiten Lamellen (22) aufweist, und wobei jede zweite Nut (15, 16) einen im Wesentlichen kurvenförmigen Verlauf aufweist.

20. Reifen für Motorräder nach Anspruch 19, wobei die zumindest eine zweite Lamelle (22) an zumindest einem Ende einer zweiten Nut (15, 16) angeordnet ist.

## Revendications

1. Pneu (100) pour motocycles, ayant une bande de roulement (8) comprenant une partie annulaire centrale (A) située symétriquement à califourchon sur un plan équatorial (X-X) ; et deux parties annulaires d'épaulement (B) situées sur des côtés axialement opposés par rapport à la partie annulaire centrale (A) ;
la bande de roulement (8) comprend une pluralité de rainures et de lamelles adaptées pour définir une sculpture de bande de roulement ;
le pneu (100) étant **caractérisé en ce que** :
la partie annulaire centrale (A) ayant une extension axiale (M) ne dépassant pas 65% du développement axial de la bande de roulement (8) ;
la partie annulaire centrale (A) comprend au moins deux premières rainures essentiellement longitudinales (18, 19), opposées l'une à l'autre par rapport au plan équatorial X-X du pneu ;
- les premières rainures essentiellement longitudinales (18, 19) s'étendent principalement dans la partie annulaire centrale (A) ;
- le rapport vide-caoutchouc défini par les lamelles de ladite partie annulaire centrale (A) étant inférieur au rapport vide-caoutchouc défini par les lamelles de chaque partie annulaire d'épaulement (B).

2. Pneu pour motocycles selon la revendication 1, dans lequel chaque partie annulaire d'épaulement (B) comprend une pluralité de lamelles latérales (21), les lamelles latérales (21) s'étendant essentiellement dans la partie annulaire d'épaulement (B) et étant agencées obliquement par rapport au plan équatorial (X-X) dudit pneu.

3. Pneu pour motocycles selon la revendication 1, dans lequel au moins l'une des lamelles latérales (21) de chaque partie annulaire d'épaulement (B) présente une inclinaison φ < 60° en valeur absolue par rapport à une direction parallèle à un plan équatorial du pneu.

4. Pneu pour motocycles selon l'une quelconque des revendications précédentes 1 à 3, dans lequel la partie annulaire centrale (A) comprend un module (14) répété le long d'une direction de développement circonférentiel du pneu comprenant lesdites au moins deux premières rainures essentiellement longitudinales (18, 19) et ladite au moins une première lamelle (20) et où, dans chaque module (14), lesdites deux premières rainures essentiellement longitudinales (18, 19) sont mutuellement décalées dans la direction circonférentielle.

5. Pneu pour motocycles selon l'une quelconque des revendications précédentes 1 à 4, dans lequel le nombre de lamelles de chaque partie annulaire d'épaulement (B) est supérieur au nombre de lamelles de la partie annulaire centrale (A).

6. Pneu pour motocycles selon la revendication 4, dans lequel dans chaque module, ladite au moins une première lamelle (20) est agencée au niveau d'au moins une extrémité d'une première rainure essentiellement longitudinale (18, 19).

7. Pneu pour motocycles selon la revendication 6, dans lequel chaque première rainure longitudinale (18, 19) a une ligne centrale définissant une direction d'extension de ladite première rainure essentiellement longitudinale (18, 19) ;
ladite première lamelle (20) s'étendant essentiellement pour au moins une partie de son extension le long d'une ligne parallèle au prolongement de ladite direction d'extension de ladite première rainure essentiellement longitudinale (18, 19).

8. Pneu pour motocycles selon la revendication 6, dans lequel chaque première rainure longitudinale (18, 19) a une ligne centrale définissant une direction d'extension de ladite première rainure essentiellement longitudinale (18, 19) ; ladite première lamelle (20) s'étendant essentiellement pour au moins une partie de son extension le long d'une ligne inclinée par rapport au prolongement de ladite direction d'extension de ladite première rainure essentiellement longitudinale (18, 19) de manière à former un angle avec le prolongement de ladite direction d'extension.

9. Pneu pour motocycles selon la revendication 4, dans lequel ladite première lamelle (20) s'étend à partir d'une extrémité de ladite première rainure essentiellement longitudinale (18, 19).

10. Pneu pour motocycles selon la revendication 9, dans lequel ladite première lamelle (20) s'étend à partir d'une extrémité de ladite première rainure essentiellement longitudinale (18, 19) au moins jusqu'audit plan équatorial (X-X).

11. Pneu pour motocycles selon la revendication 9 ou 10, dans lequel ladite première lamelle (20) s'étend à partir d'une extrémité d'une première rainure essentiellement longitudinale (18, 19) vers la première rainure longitudinale (18, 19) qui est consécutive de manière circonférentielle.

12. Pneu pour motocycles selon l'une quelconque des revendications précédentes 4 à 11, dans lequel ladite première lamelle (20) a une longueur mesurée le long de son extension non inférieure à 20% de l'extension axiale M de la partie annulaire centrale (A).

13. Pneu pour motocycles selon l'une quelconque des revendications précédentes 4 à 12, dans lequel ladite première lamelle (20) a une longueur mesurée le long de son extension ne dépassant pas 200% de l'extension axiale M de la partie annulaire centrale (A).

14. Pneu pour motocycles selon l'une quelconque des revendications précédentes 4 à 13, dans lequel ladite première lamelle (20) a une longueur mesurée le long de son extension ne dépassant pas 50% de la longueur de la première rainure essentiellement longitudinale (18, 19) mesurée le long de son extension.

15. Pneu pour motocycles selon l'une quelconque des revendications précédentes 4 à 14, dans lequel ladite première lamelle (20) a une longueur mesurée le long de son extension non inférieure à 10% de la longueur de la première rainure essentiellement longitudinale (18, 19) mesurée le long de son extension.

16. Pneu pour motocycles selon l'une quelconque des revendications précédentes 1 à 15, dans lequel chaque première rainure longitudinale (18, 19) a un profil essentiellement curviligne de manière à former une concavité.

17. Pneu pour motocycles selon l'une quelconque des revendications précédentes 1 à 16, dans lequel chaque première rainure essentiellement longitudinale (18, 19) a une largeur qui varie le long de son extension.

18. Pneu pour motocycles selon l'une quelconque des revendications précédentes 4 à 17, dans lequel dans chaque module (14) il existe deux premières lamelles (20) pour chaque première rainure longitudinale (18, 19), chaque première lamelle (20) étant agencée au niveau d'une extrémité respective de ladite première rainure essentiellement longitudinale (18, 19).

19. Pneu pour motocycles selon l'une quelconque des revendications 4 à 18, dans lequel ladite bande de roulement (8) a une pluralité de deuxièmes rainures (15, 16) et une pluralité de deuxièmes lamelles (22) et dans lequel chaque deuxième rainure (15, 16) a un profil essentiellement curviligne.

20. Pneu pour motocycles selon la revendication 19, dans lequel ladite au moins une deuxième lamelle (22) est agencée au niveau d'au moins une extrémité d'une deuxième rainure (15, 16).
